# EUROPÄISCHE PATENTANMELDUNG

(11) **EP 0 730 002 A1**
(43) Veröffentlichungstag der Anmeldung: **04.09.1996**
(21) Anmeldenummer: 96102406.4
(22) Anmeldetag: 17.02.1996
(51) Int. Cl.: C08K 7/14, C08J 3/20

(54) **Flächiges Halbzeug**

(30) Priorität: 01.03.1995 DE 19507070
(71) Anmelder: BASF AKTIENGESELLSCHAFT, 67056 Ludwigshafen (DE)
(72) Erfinder: Dittmar, Harri, 67271 Battenberg (DE); Schlarb, Alois, Dr., 67146 Deidesheim (DE); Ohlig, Hilmar, 67657 Kaiserslautern (DE); Ittemann, Peter, Dr., 68623 Lampertheim (DE); Heinrich, Fritz, Dr., 67061 Ludwigshafen (DE); Volker, Altsädt, Dr., Uni Hamburg, Abt. Technische, 21071 Hamburg (DE); Brentrup, Karl-Ludwig, 49504 Lotte (DE)

(57) **Zusammenfassung**

Die Erfindung betrifft ein flächiges Halbzeug aus glasmattenverstärkten Thermoplasten, bei dem mehr als 50 Gew.-% der Glasfasern eine Länge von weniger als 2 mm und mehr als 5 Gew.-% eine Länge von mehr als 2 mm haben, aber praktisch keine Fasern länger als 50 mm sind, sowie ein Verfahren zur Herstellung dieses Halbzeugs, bei dem Thermoplast und Glasfasern extrudiert und eine flächige Bahn geformt wird, sowie die Verwendung des Halbzeugs zur Herstellung von Fertigteilen durch Pressen oder Tiefziehen.

## Beschreibung

Die Erfindung betrifft ein flächiges Halbzeug aus glasmattenverstärkten Thermoplasten (GMT) sowie ein Verfahren zu seiner Herstellung durch Extrusion von Thermoplast und Glasfasern und Formen zu einer flächigen Bahn sowie die Verwendung des Halbzeugs zur Herstellung von Fertigteilen durch Tiefziehen und Pressen.

Bauteile aus GMT, insbesondere aus glasmattenverstärktem Polypropylen finden in zunehmendem Maße Anwendung im Automobilbau.

Ein gebräuchliches Verfahren zur Herstellung von GMT ist die Schmelzeimprägnierung. Dabei werden mehrere Lagen von Glasfasermatten und Thermoplastschmelze-Bahnen kontinuierlich, vorzugsweise in einer Doppelbandpresse, laminiert und unter Druck abgekühlt. Derartige Verfahren sind z.B. in DE-B 23 12 816 und DE-B 29 48 235 beschrieben. Man setzt dabei Fasermatten ein, die aus Endlosfasern oder aus Schnittfasern einer Länge von 50 bis 100 mm bestehen. Um ein fließfahiges Halbzeug zu erhalten, können die Matten genadelt werden, wobei ein Teil der Fasern senkrecht zur Bahnrichtung orientiert wird und ein geringer Anteil der Glasfasern zerbrochen wird (s. z.B. DE-B 30 29 442). Das Schmelzeimprägnierverfahren ergibt zwar ein hervorragend verarbeitbares Halbzeug, aus dem Fertigteile mit guten mechanischen Eigenschaften hergestellt werden können, es ist technisch aber sehr aufwendig. Darüber hinaus können derartige Halbzeuge nicht nach dem kostengünstigen Tiefziehverfahren verarbeitet werden.

Bei einem anderen Verfahren geht man nach dem Prinzip der Papierherstellung von einem aufgeschwemmten Brei aus Wasser, Thermoplastpulver und Schnittglasfasern aus, der auf einem Sieb abgestrichen, verdichtet und getrocknet wird. Es werden Glasfasern mit einer einheitlichen Länge von 12,7 bzw. 25,4 mm eingesetzt. Derartige Verfahren sind z.B. in EP-A 39 292, EP-A 71 219 und EP-A 148 761 beschrieben. Das Herstellverfahren ist wegen des Trocknungsprozesses sehr energieaufwendig. Das Halbzeug nach EP-A 148 761 wird dort zwar als tiefziehbar bezeichnet, es hat sich aber gezeigt, daß es nur eine geringe Duktilität hat, so daß die Umformwiderstände zu hoch werden und das Halbzeug beim Tiefziehen aufreißt. Es kann deshalb nicht zu Fertigteilen mit komplizierter Struktur tiefgezogen werden.

Der Erfindung lag daher die Aufgabe zugrunde, ein einfach und billig herstellbares, flächiges Halbzeug bereitzustellen, welches sowohl durch Pressen als auch durch Tiefziehen gut verarbeitbar ist und zu Fertigteilen mit befriedigenden mechanischen Eigenschaften umgeformt werden kann.

Gegenstand der Erfindung ist ein flächiges Halbzeug aus glasmattenverstärkten Thermoplasten, welches 40 bis 80 Gew.-% Thermoplast und 60 bis 20 Gew.-% Glasfasern enthält, wobei mehr als 50 Gew.-% der Glasfasern eine Länge von weniger als 2 mm, mehr als 5 Gew.-% eine Länge von mehr als 2 mm und praktisch keine Glasfasern eine Länge von mehr als 20 mm haben, und daß die Fasern im wesentlichen nur in zwei Dimensionen angeordnet sind.

In der deutschen Patentanmeldung P 43 30 816.0 ist ein GMT-Halbzeug beschrieben, bei dem mehr als 50 Gew.-% der Glasfasern eine Länge von mehr als 2 mm und mehr als 5 Gew.-% eine Länge von weniger als 2 mm aufweisen. Die vorliegende Erfindung betrifft ein Halbzeug mit deutlich kürzeren Fasern.

Ein weiterer Gegenstand der Erfindung ist ein Verfahren zur Herstellung dieses flächigen Halbzeugs, bei dem man Thermoplast und Glasfasern einer Länge von mehr als 3 mm, die gegebenenfalls ganz oder teilweise durch zerkleinertes GMT-Recyclat ersetzt sein können, einem Extruder zuführt und dort vermischt, durch eine Düse auspreßt und zu einer flächigen Bahn formt, die gegebenenfalls beidseitig mit einem Faservlies kaschiert wird.

Die Extrusion von glasfaserhaltigen Thermoplasten zu Profilen wurde zwar bisher schon praktiziert, dabei werden aber stark scherende Extruder verwendet, so daß die Glasfasern auf Faserlängen unterhalb von 1 mm zerkleinert werden, und keine Fasern einer Länge von mehr als 2 mm mehr vorhanden sind.

Das erfindungsgemäße flächige Halbzeug enthält 40 bis 80 Gew.-% Thermoplast und 60 bis 20, vorzugsweise 50 bis 25 Gew.-% Glasfasern. Als Thermoplasten sind Polyolefine, Styrolpolymere, Polyamide, gesättigte Polyester, Polycarbonate, Polyetherimide, Polyetherketone und Polyethersulfone geeignet. Bevorzugt ist ein Propylenhomopolymerisat mit einem Schmelzindex MFI zwischen 5 und 500 [g/10 min] bei 230°C/2,16 kg, sowie Polypropylen-Pfropfpolymerisate, z.B. mit Acrylsäure. Das Halbzeug kann darüber hinaus übliche Zusatzstoffe, wie Stabilisatoren, Füllstoffe, Farbstoffe, Flammschutzmittel und Haftvermittler enthalten.

Bei der Fertigung des flächigen Halbzeugs geht man entweder von Endlos-Glasfaserrovings oder von Schnittglasfasern, die beispielsweise 3.5 mm lang sind, aus. Diese Fasern können nun entweder zusammen mit dem Thermoplast-Granulat bzw. -Pulver in den Einzugsteil des Extruders zugegeben werden oder sie werden in die Thermoplastschmelze stromabwärts über eine Dosierschnecke oder einen Einfüllstutzen zugeführt.

Es ist auch möglich, ganz oder teilweise von zerkleinertem GMT-Recyclat auszugehen. Als Ausgangsmaterial dienen dann GMT-Recyclatpartikel, die - wie in dem Artikel von Schlarb "Glasmattenverstärktes Polypropylen - ein recyclingfähiger Werkstoff in KUNSTSTOFFE 83 (1993), S. 377-382 beschrieben - aus GMT-Abfall durch Mahlen gewonnen werden und vorzugsweise eine mittlere Teilchengröße (Zahlenmittel) zwischen 3 und 30 mm, vorzugsweise 5 bis 15 mm aufweisen. Unter Teilchengröße ist dabei der längste Durchmesser der Partikel zu verstehen, die im allgemeinen die Form flacher, unregelmäßig geformter Plättchen mit einer Dicke von etwa 1 bis 5 mm, vorzugsweise von 2 bis 4 mm haben.

An dieser Stelle können auch weitere Additive, z.B. Stabilisatoren, Nucleierungsmittel und Füllstoffe zugesetzt werden.

Im Extruder wird der Thermoplast plastifiziert und mit den restlichen Komponenten innig vermischt. Die Extrusion wird so durchgeführt, daß die Glasfasern nicht zu stark zerkleinert werden. Dies wird erreicht, wenn man schwach scherende Ein- oder Mehrwellenextruder verwendet, vorzugsweise gleichsinnig drehende Zweiwellenextruder, wobei die Schnecken im Gegensatz zum üblichen Aufbau (z.B. für eine Compoundierung) im wesentlichen nur schwach scherende Elemente aufweisen.

Nach der Extrusion weisen mehr als 50 Gew.-% der Glasfasern eine Länge von weniger als 2 mm auf, mehr als 5 Gew.-% eine Länge von mehr als 2 mm, und praktisch keine Fasern sind länger als 50 mm. Eine bevorzugte Faserlängenverteilung ist:
- mehr als 60 Gew.-% kürzer 2 mm
- mehr als 10 Gew.-% länger als 2 mm
- mehr als 2 Gew.-% länger als 4 mm,
- keine Fasern länger als 20 mm.

Die Bestimmung der Faserlängenverteilung gliedert sich in 3 Schritte:
1. Veraschung
2. Fraktionierung
3. Präparation und Bildauswertung
   - Zu 1.:: Die Halbzeugproben werden in einem Muffelofen bei 700°C für 10 min eingelagert. Dabei zersetzt sich die Polymermatrix vollständig und ein Faserhaufwerk bleibt zurück.
   - Zu 2.:: Fraktionierung:
   Aufgrund des großen Faserlängenbereichs kann das Faserhaufwerk nicht in einer Fraktion vermessen werden. Das Haufwerk wird deshalb mit Hilfe einer metallischen Siebplatte in unterschiedliche Fraktionen aufgeteilt. Zur Platte: Ebene, elektrisch geerdete Messingplatte mit 1 mm Löchern, die im Mittel von ihren Nachbarn 4 mm entfernt sind; eine Zentralzone und ein 20 mm breiter Rand sind lochfrei. Das Faserhaufwerk der Probe wird in der zentralen lochfreien Zone mit Holzstäben vorsichtig zerlegt, so daß die Fasern parallel zur Oberfläche orientiert sind. In diesem Zustand werden sie vorsichtig parallel zur Oberfläche über die Löcher zur Randzone geschoben.
   Das Siebverfahren liefert drei Faktoren:
   - Fraktion I:: Kleine Fasern (< 1 mm) fallen durch die Löcher in ein gläsernes Auffanggefäß.
   - Fraktion II:: Fasern mittlerer Länge (Schwergewicht um 2 bis 3 mm) bilden eine Schicht auf der Platte, die nach dem Entfernen von Fraktion III in ein Auffanggefäß geklopft wird.
   - Fraktion III:: Längere Fasern (Schwergewicht > 4 mm) bilden beim Hin- und Herbewegen ein leichtes Haufwerk, das sich in der Randzone sammelt und dort mit einer Pinzette in ein Gefäß überführt wird.
   - Zu 3.:: Präparation und Bildauswertung
   Jede der drei Fraktionen wird in Paraffinöl gegeben, durch Handschütteln verteilt, auf einen Objektträger oder eine Glasschale aufgebracht und dort gegebenenfalls mit einem Holzstab aufgelockert.
   Die Bilder von Fraktion I werden über Durchlicht-Mikroskopie erzeugt und mittels eines Computers mit entsprechender Software zu einer Längenverteilung von Fraktion I verarbeitet. Die Bilder der Fraktionen II und III werden im Durchlicht von einem Makroobjektiv betrachtet und mittels eines Computers mit entsprechender Software zu den Längenverteilungen der Fraktionen verarbeitet.
   Die Verteilungen der Fraktionen werden im Anschluß daran zu einer Faserlängenverteilung der Probe umgerechnet.

Nach der Plastifizierung und Zerkleinerung im Extruder wird die Masse durch eine Düse ausgepreßt, und zwar entweder durch eine Breitschlitzdüse direkt zu einer flächigen Bahn oder durch eine Runddüse zu einem Strang, der dann anschließend zu einer flächigen Bahn verformt wird. In dieser Bahn berühren und überschneiden sich die wenigen relativ langen Glasfasern, so daß man noch von einer Glasmatte sprechen kann. Die endgültige Formgebung geschieht mittels eines Kalanders, eines Glättwerks, durch Walzen oder vorzugsweise auf einer Doppelbandpresse. Dabei kann gegebenenfalls beidseitig ein Faservlies, vorzugsweise aus Glasfasern oder Papier, mit einem Flächengewicht von 20 bis 50 g·m⁻² aufkaschiert werden, wodurch die flächige Bahn an Stabilität gewinnt und die Oberfläche optisch sowie für eine weitere Veredlung verbessert wird. Das erfindungsgemäße Halbzeug hat vorzugsweise eine Breite von 60 bis 500 cm, insbesondere von 80 bis 150 cm, eine Dicke von 1,0 bis 6 mm, insbesondere von 2 bis 4 mm, und ein Flächengewicht von 1000 bis 10 500 g·m⁻², insbesondere von 2000 bis 7000 g·m⁻².

Ein weiteres Charakteristikum des erfindungsgemäßen flächigen Halbzeug ist, daß die Glasfasern im wesentlichen nur in zwei Dimensionen, d.h. nur in der Bahnebene angeordnet sind, wobei sie vorzugsweise mindestens in einem Teilbereich der Bahn senkrecht zur Bahnrichtung eine Vorzugsorientierung aufweisen. Unter Orientierung ist keine exakt parallele Anordnung der einzelnen Fasern zu verstehen; es handelt sich vielmehr um eine Vorzugsrichtung, so daß noch eine Berührung und Überschneidung der einzelnen Fasern auftreten kann. Die Orientierung kann über die Herstellung so gesteuert werden, daß das Halbzeug anisotrope mechanische Eigenschaften aufweist.

Die Faserorientierung entsteht beim Auspressen bzw. beim Kalandrieren der Halbzeugbahn. Beim Auspressen durch eine Breitschlitzdüse erhält man eine Kern/Mantel-Struktur mit einer Faserorientierung im Kern senkrecht zur Bahnrichtung und im Mantel parallel dazu, wobei die Dicke von Kernschicht zu den Mantelschichten zwischen 70 : 30 und 50 : 50 schwanken kann. Beim Umformen des Extrudats im Walzenspalt eines Kalanders wird ebenfalls eine Faserorientierung senkrecht zur Bahnrichtung erzeugt und zwar auch dann, wenn vorher die Extrusion aus einer Runddüse erfolgte.

Das erfindungsgemäße Halbzeug kann nach den üblichen GMT-Verarbeitungsverfahren zu Fertigteilen umgeformt werden. Dazu wird es zunächst über den Erweichungspunkt des Thermoplasten aufgeheizt, was z.B. durch Infrarotaufheizung, Umluftheizung oder Kontaktheizung erfolgen kann. Da die Fasern im Halbzeug im wesentlichen nur in einer Ebene angeordnet sind, quillt das Halbzeug beim Aufheizen in wesentlich geringerem Maße auf als herkömmliches GMT. Dadurch bietet es auch weniger Oberfläche für den Luftzutritt und eine dadurch bedingte Schädigung der Thermoplastmatrix durch Sauerstoff. Das Halbzeug weist bei der Umformung eine bessere Fließfähigkeit auf als gewöhnliches handelsübliches GMT-Halbzeug, so daß der Energieaufwand beim Verpressen geringer ist. Die Fertigteile zeigen befriedrigende mechanische Eigenschaften, insbesondere ein hohes Steifigkeitsniveau.

Ein wichtiger Vorteil des erfindungsgemäßen Halbzeugs ist seine Tiefziehbarkeit. Auf üblichen Anlagen lassen sich Fertigteile auch komplizierter Struktur mit Wanddicken von 1 bis 5 mm herstellen. Ein direktes Kaschieren der Bauteile in einem Arbeitsgang, beispielsweise mit textilen Materialien oder mit Folien (mit oder ohne Schaumrücken) ist möglich. Man kann auf diese Weise Automobilteile₁ wie Türverkleidungen, Dachhimmel, Hutablagen, aber auch anspruchsvollere Teile, wie Instrumententafeln herstellen. Auch die Anwendung im Maschinenbau, in der Möbelindustrie, auf dem Bau- und Verpackungssektor ist möglich.

### Beispiele

### Beispiel 1

Einem gleichsinnig drehenden Zweiwellenextruder (Hersteller Werner und Pfleiderer, Stuttgart, Typ ZSK 40) wurde Polypropylen-Granulat und Additive mit einem Massestrom von 16,6 kg/h zugeführt und bei 235°C mit stromabwärts zugeführten Endlos-Glasfaserrovings von 1200 Tex vermischt, die Mischung durch eine Düse ausgetragen und in einer Doppelbandpresse auf 3,8 mm Dicke kalibriert. Das Halbzeug hat einen Fasergehalt von 27,5 Gew.-%. Die Fasern weisen folgende Verteilung auf:
63 Gew.-% kürzer als 2 mm
37 Gew.-% länger als 2 mm
15 Gew.-% länger als 4 mm.

Das Halbzeug wurde in einem Umluftofen auf 220°C aufgeheizt und in einer hydraulischen Presse bei einer Werkzeugtemperatur von 60°C zu Prüfplatten verpreßt. Die Preßarbeit beträgt 350 Nm. Die Umformung wurde in einer Kavität von 210 mm x 210 mm bei einem Umformgrad von 1,9 vorgenommen.

Das Fertigteil hat einen Elastizitätsmodul nach EN 61 von 4100 MPa, eine Zugfestigkeit von 55 MPa bei einer Bruchdehnung von 1,9 %.

### Beispiel 2

Einem gleichsinnig drehenden Zweiwellenextruder (Hersteller Werner und Pfleiderer, Stuttgart, Typ ZSK 40) wurde Polypropylen-Granulat und Additive mit einem Massestrom von 20 kg/h zugeführt und bei 250°C stromabwärts über eine Seitendosierung (Hersteller Werner und Pfleiderer, Stuttgart, Typ ZSB) mit Schnittglasfasern vermischt, durch eine Düse ausgetragen, in einem Walzenspalt auf 3,8 mm Dicke kalibriert. Das Halbzeug hat einen Fasergehalt von 30,2 Gew.-%. Die Fasern weisen folgende Verteilung auf:
68,3 Gew.-% kürzer als 2 mm
31,7 Gew.-% länger als 2 mm
2,0 Gew.-% länger als 4 mm.

Das Halbzeug wurde in einem Umluftofen aufgeheizt und in einer hydraulischen Presse bei einer Werkzeugtemperatur von 60°C zu Prüfplatten verpreßt. Die Preßarbeit beträgt 500 Nm. Die Umformung wurde in einer Kavität von 210 mm x 210 mm bei einem Umformgrad von 2 vorgenommen.

Das Fertigteil hat einen Elastizitätsmodul nach EN 61 von 4600 MPa, eine Zugfestigkeit von 60 MPa bei einer Bruchdehnung von 2 %.

### Beispiel 3

Einem gleichsinnig drehenden Zweiwellenextruder (Hersteller Werner und Pfleiderer, Stuttgart, Typ ZSK 40) wurde GMT-Mahlgut mit einem Massestrom von 54 kg/h zugeführt und bei 220°C durch eine Düse ausgetragen, in einem Walzenspalt auf 4 mm Dicke kalibriert. Das Halbzeug hat einen Fasergehalt von 35,6 Gew.-%. Die Fasern weisen folgende Verteilung auf:
83,9 Gew.-% kürzer als 2 mm
16,1 Gew.-% länger als 2 mm
6,6 Gew.-% länger als 4 mm.

Das Halbzeug wurde in einem Umluftofen aufgeheizt und in einer hydraulischen Presse bei einer Werkzeugtemperatur von 60°C zu Prüfplatten verpreßt. Die Preßarbeit beträgt 440 Nm. Die Umformung wurde in einer Kavität von 210 mm x 210 mm bei einem Umformgrad von 2 vorgenommen.

Das Fertigteil hat einen Elastizitätsmodul nach EN 61 von 4700 MPa, eine Zugfestigkeit von 50 MPa bei einer Bruchdehnung von 1,4 %.

### Beispiel 4

Einem gleichsinnig drehenden Zweiwellenextruder (Hersteller Berstorff, Hannover, Typ ZE 130) wurde GMT-Mahlgut mit verschiedenen Additiven mit einem Massestrom von insgesamt 350 kg/h zugeführt, dort aufgeschmolzen und homogenisiert, durch eine Düse ausgetragen und in einer Doppelbandpresse auf 1,8 mm Dicke kalibriert. Das Halbzeug weist einen Glasgehalt von 40 Gew.-% auf. Die Fasern zeigen folgende Verteilung:
90,6 Gew.-% kürzer als 2 mm
9,4 Gew.-% länger als 2 mm
3,4 Gew.-% länger als 4 mm.

Das Halbzeug wurde in einem Umluftofen aufgeheizt und in einer hydraulischen Presse bei einer Werkzeugtemperatur von 60°C zu Prüfplatten verpreßt. Die Preßarbeit beträgt 390 Nm. Die Umformung wurde in einer Kavität von 210 mm x 210 mm bei einem Umformgrad von 1,9 vorgenommen.

Das Fertigteil hat einen Elastizitätsmodul nach EN 61 von 4350 MPa, eine Zugfestigkeit von 45 MPa bei einer Bruchdehnung von 1,4 %.

### Beispiel 5

Das Halbzeug nach Beispiel 1 wurde in einer konventionellen Tiefziehanlage wie eine Thermoplastfolie eingespannt. Danach wurde es mit zwei verfahrbaren Infrarot-Strahlerfeldern von unten und oben auf die Verarbeitungstemperatur von 190°C erwärmt. Nach Erreichen dieser Temperatur wurden die Strahlerfelder zurückgefahren. Das Tiefziehwerkzeug wurde von unten gegen das erwärmte Halbzeug gefahren und mittels Vakuum an die Werkzeugwanderung angesaugt.

### Beispiel 6

Bei Verwendung einer 1 mm dicken Polypropylenfolie als Dekorschicht wurde die Tiefzieheinrichtung um einen Spannrahmen und eine Heizebene erweitert. Zu der in Beispiel 5 dargestellten Anordnung kam eine darüberliegende Ebene, wo die Folie angeordnet war und von unten durch eine zusätzliche Strahlerebene erwärmt wurde. Die Heiztemperatur der Folienrückseite lag dabei deutlich unterhalb der Halbzeugtemperatur bei ca. 160°C. Nachdem die drei Strahlerfelder zurückgefahren waren, wurde die Folie zusammen mit dem darunterliegenden Trägerteil auf das Werkzeug gesaugt. Der Wärmeinhalt des Halbzeuges reichte aus, um die auf knapp unterhalb der Schmelztemperatur erwärmte Folienrückseite gerade anzuschmelzen und ein Verschweißen beider Lagen zu gewährleisten.

### Beispiel 7

Bei Verwendung eines textilen Dekors mit einem Flächengewicht von 200 g·m⁻² auf Polypropylen-Basis wurde die zusätzliche Ebene mit Spannrahmen und Strahlerfeld unterhalb des Halbzeugs angeordnet. Bei dieser Verfahrensvariante wurde das Halbzeug auf das Werkzeug gesaugt; im Gegensatz zu den Beispielen 5 und 6 mußte also ein Negativ-Werkzeug eingesetzt werden.

## Patentansprüche

1. Flächiges Halbzeug aus glasmattenverstärkten Thermoplasten (GMT), welches 40 bis 80 Gew.-% Thermoplast und 60 bis 20 Gew.-% Glasfasern enthält, dadurch gekennzeichnet, daß mehr als 50 Gew.-% der Glasfasern eine Länge von weniger als 2 mm, mehr als 5 Gew.-% eine Länge von mehr als 2 mm und praktisch keine Glasfasern eine Länge von mehr als 20 mm haben, und daß die Fasern im wesentlichen nur in zwei Dimensionen angeordnet sind.

2. Flächiges Halbzeug nach Anspruch 1, dadurch gekennzeichnet, daß die Glasfasern mindestens in einem Teilbereich der Halbzeugbahn eine vorzugsorientierung aufweisen.

3. Flächiges Halbzeug nach Anspruch 1, dadurch gekennzeichnet, daß der Thermoplast ein Propylenpolymerisat ist.

4. Flächiges Halbzeug nach Anspruch 1, dadurch gekennzeichnet, daß mindestens ein Teil der Glasfasern und des Thermoplasten von GMT-Recyclat stammt.

5. Verfahren zur Herstellung des flächigen Halbzeugs nach Anspruch 1, dadurch gekennzeichnet, daß man Thermoplast und Glasfasern einer Länge von mehr als 3 mm, die gegebenenfalls ganz oder teilweise durch zerkleinertes GMT-Recyclat ersetzt sein können, einem Extruder zuführt und dort vermischt, durch eine Düse auspreßt und zu einer flächigen Bahn formt, die gegebenenfalls beidseitig mit einem Faservlies kaschiert wird.

6. Verwendung des Halbzeugs nach Anspruch 1 zur Herstellung von Fertigteilen durch Tiefziehen des Halbzeugs bei Temperaturen oberhalb der Erweichungstemperatur des Thermoplasten.

7. Verwendung des Halbzeugs nach Anspruch 1 zur Herstellung von Fertigteilen durch Pressen des Halbzeugs bei Temperaturen oberhalb der Erweichungstemperatur des Thermoplasten.
